# EUROPEAN PATENT SPECIFICATION

(11) **EP 3 388 635 B1**
(45) Date of publication and mention of the grant of the patent: **02.03.2022**
(21) Application number: 17206562.5
(22) Date of filing: 12.12.2017
(51) Int. Cl.: F01D 5/30, F01D 5/08

(54) **RETAINER FOR A ROTATING BLADE, CORRESPONDING TURBINE UNIT AND GAS TURBINE**
HALTER FÜR EINE LAUFSCHAUFEL, ZUGEHÖRIGE TURBINENEINHEIT UND GASTURBINE
DISPOSITIF DE RETENUE POUR AUBE ROTORIQUE, UNITÉ DE TURBINE ET TURBINE À GAZ ASSOCIÉES

(30) Priority: 11.04.2017 KR 20170046874
(43) Date of publication of application: 17.10.2018
(73) Proprietor: Doosan Heavy Industries & Construction Co., Ltd., Seongsan-gu Changwon-si, Gyeongsangnam-do 51711 (KR)
(72) Inventor: CHOI, Jae Hyeong, 42253 Daegu (KR)
(74) Representative: BCKIP

(56) References cited:
- EP-A1- 1 944 471
- EP-A1- 2 236 759
- EP-A2- 2 009 236
- EP-A2- 3 070 268
- GB-A- 2 435 909
- US-A1- 2011 129 342
- US-B1- 6 416 282

## Description

### BACKGROUND OF THE INVENTION

### 1. Field of the Invention

The present invention relates to a retainer for a rotating blade, a turbine unit, and a gas turbine using the same, and more particularly, to a retainer for a rotating blade having an improved structure in which a rotating blade of a gas turbine is fixed, a turbine unit, and a gas turbine using the same.

### 2. Description of the Related Art

Examples of a turbine that is a machine device that attains a rotational force with an impulsive force or a reaction force using the flow of a compressive fluid, such as steam or gas, include a steam turbine using steam, and a gas turbine using high-temperature combustion gas.

Among them, the gas turbine largely includes a compressor, a combustor, and a turbine. The compressor includes an air introduction port through which air is introduced, and a plurality of compressor vanes and a plurality of compressor blades, which are alternately disposed within a compressor casing.

The combustor supplies fuel to the air compressed by the compressor, ignites the fuel by using a burner so that a high-temperature and high-pressure combustion gas can be generated.

In the turbine, a plurality of turbine vanes and a plurality of turbine blades are alternately disposed within a turbine casing. Also, a rotor is disposed to pass through the compressor, the combustor, the turbine, and the center of an exhaust chamber.

The rotor is configured in such a way that both ends thereof are rotatably supported by a bearing. A plurality of discs are fixed to the rotor so that the blades are connected to the plurality of discs, respectively, and simultaneously a driving shaft, such as a power generator, is connected to an end of a side of the exhaust chamber.

Because such a gas turbine does not include a reciprocating motion machine, such as a piston for a four-stroke engine, there is no mutual frictional part, such as a piston-cylinder, consumption of a lubricating oil is very low, amplitude that is the feature of the reciprocating motion machine is greatly reduced, and high-speed motion is possible.

In a brief description of the operation of the gas turbine, air compressed by the compressor is mixed with fuel and is combusted so that high-temperature combustion gas is generated, and the generated combustion gas is injected into a turbine. While the injected combustion gas passes through the turbine vanes and the turbine blades, rotational force is generated, and thus, the rotor rotates.

A retainer is mounted on the rotor of the turbine and is disposed around a combined part of the turbine blades and the rotor in a circumferential direction. A cooling space into which cooled air is introduced, is formed between the retainer and the rotor, and the cooled air is introduced into the cooling space so that the rotor and the turbine blades are prevented from being overheated.

However, because one cooling space is formed in a rear surface of a retainer according to the related art, the cooled air is moved directly to the outside before cooling the combined part of the turbine blades and the rotor. Thus, the cooling efficiency of the turbine blades and the rotor may be lowered.

EP 3 070 268 A2 discloses lock plates arranged at opposite ends of a turbine rotor for preventing turbine blades from axial movement. The lock plates are hollow and comprise a plurality of radially extending chambers. The chambers are defined by radially extending partition walls being spaced in a circumferential direction.

EP 2 236 759 A1 discloses a sealing plate for a turbine disc, wherein the sealing plate comprises an inner channel extending in a radial direction. A radially extending sidewall of the plate comprises an opening for discharging air from the channel.

EP 2 009 236 A2, US 6 416 282 B1, GB 2 435 909 A, and US 2011/0129342 A1 disclose turbine members that have radially extending cooling channels.

EP 1 944 471 A1 discloses a rotor disk for a turbine including a sealing element secured against a displacement in a circumferential direction by a bolt held in a cavity, and a locking plate provided with a cavity. The sealing element includes spacer elements provided on a surface of the sealing element that faces a side surface of the rotor disk.

### SUMMARY OF THE INVENTION

The present invention provides a retainer for a rotating blade in accordance with claim 1. The retainer according to the invention has an improved structure in which a cooled air flow path is improved so that the cooling efficiency of a rotor and blades can be improved, a turbine unit, and a gas turbine using the same.

According to a first aspect of the present invention, there is provided a retainer for a rotating blade, which is configured to inhibit deviation of the rotating blade mounted on a rotor of a gas turbine, the retainer including: a retainer frame configured to be disposed at one side of the rotating blade and configured to form an inside chamber for introducing cooled air between the retainer frame and the rotating blade; a barrier wall formed on the retainer frame and configured to be disposed towards said side of the rotating blade and configured to divide the inside chamber into a plurality of cooling chambers with respect to a radial direction; and a fixing unit disposed at one side of the retainer frame and configured to fix the retainer frame to the rotor.

The retainer may be configured for a rotating blade, one end of which has a fir tree shape, and a retainer frame may be provided at both sides of the rotating blade. According to the invention, the barrier wall includes a plurality of barrier wall members spaced apart from one another in the radial direction of the rotor, and communication holes are formed in the plurality of barrier wall members so that the plurality of cooling chambers communicate with one another through the communication holes. In addition, the communication holes formed in in one of the barrier wall members may be formed at crossing positions with respect to the communication holes formed in an adjacent barrier wall member.

According to second aspect of the present invention, there is provided a turbine unit including: a casing including a gas inlet formed at one side thereof and a gas outlet formed at the other side thereof, the casing configured to form a gas flow space inside thereof; a torque tube rotatably mounted in the gas flow space inside the casing; a rotor coupled to the torque tube and rotating together with the torque tube; a rotating blade mounted on the rotor; a retainer according to the first aspect of the invention, wherein the retainer has its retainer frame disposed at one side of the rotating blade and is fixed to the rotor by means of the fixing unit, wherein the barrier wall members are spaced apart from one another in the radial direction of the rotor; and a fixed blade formed at an inner wall of the casing.

A cooled air flow path may be formed between the rotating blade and the rotor, the inside chamber and the cooled air flow path may communicate with each other, wherein the cooled air flow path is configured to supply cooled air into the inside chamber.

According to another aspect of the present invention, there is provided a gas turbine including: a compressor unit configured to compress air supplied from the outside; a combustor unit configured to combust the compressed air supplied from the compressor unit and a fuel so as to generate an operating gas; and a turbine unit according to the second aspect of the invention.

### BRIEF DESCRIPTION OF THE DRAWINGS

The above and other features of the present invention will become more apparent by describing in detail exemplary embodiments thereof with reference to the attached drawings in which:
FIG. 1 is a cross-sectional view showing a schematic structure of a gas turbine according to an embodiment of the present invention;
FIG. 2 is a partial perspective view of a rotor according to an embodiment of the present invention;
FIG. 3 is a cross-sectional view of a combined part of turbine blades and a rotor of a turbine unit according to an embodiment of the present invention; and
FIG. 4 is a rear view of a retainer according to an embodiment of the present invention.

### DETAILED DESCRIPTION OF THE INVENTION

Hereinafter, a turbine according to an embodiment of the present invention will be described with reference to the attached drawings.

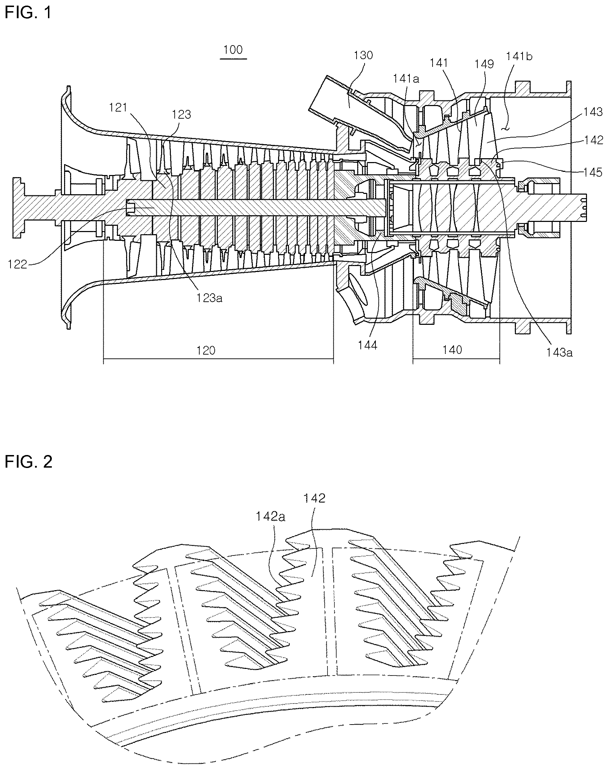

Referring to FIGS. 1 through 4, a gas turbine 100 according to an embodiment of the present invention includes a compressor unit 120, a combustor unit 130, and a turbine unit 140.

The compressor unit 120 is disposed at an upstream side based on a flow of air and compresses air supplied from the outside. The compressor unit 120 includes a plurality of compressor rotor discs 121. The plurality of compressor rotor discs 121 are coupled to one another by a central tie rod 122 in an axial direction.

The compressor rotor discs 121 are aligned along the axial direction while the tie rod 122 passes through the center of the compressor rotor discs 121.

A plurality of blades 123 are coupled to an outer circumferential surface of the compressor rotor discs 121 in a radial direction. A dovetail 123a is provided at one end of each of the blades 123 and is coupled to each of the compressor rotor discs 121.

The tie rod 122 is disposed to pass through the center of the plurality of compressor rotor discs 121, and a downstream end of the tie rod 122 is inserted into and fixed to a torque tube 144 that transfers driving force of the turbine unit 140 to the compressor unit 120.

The compressor unit 120 rotates the blades 123 due to the driving force of the turbine unit 140, compresses outside air, and supplies the compressed outside air to the downstream combustor unit 130.

The combustor unit 130 includes one or a plurality of combustors and a fuel nozzle that injects fuel into the one or the plurality of combustors.

A plurality of combustors are arranged in a casing having a cell shape. Each of the plurality of combustors includes a combustion unit that combusts the fuel to generate high-temperature compressed gas, and a transition piece that guides the high-temperature operating gas generated in the combustion unit to the turbine unit 140.

When the fuel and the compressed gas supplied from the compressor unit 120 are supplied to the plurality of combustors of the combustor unit 130, the fuel and the compressed air are combusted inside the combustors, and operating gas generated after combustion passes through the transition piece and is supplied to the downstream turbine unit 140.

The turbine unit 140 includes a casing 141, a rotor 142, a rotating blade 143, the torque tube 144, a retainer 145, and a fixed blade 149.

The casing 141 includes a gas inlet 141a through which the operating gas supplied from the combustor unit 130 is introduced and that is formed at one side of the casing 141, and a gas outlet 141b through which the operating gas after the rotating blade 143 rotates, is discharged and that is formed at the other side of the casing 141. A diffuser may be provided at the gas outlet 141b so as to smoothly discharge the operating gas. Also, a gas flow space in which the operating gas flows, is formed inside the casing 141.

The torque tube 144 is rotatably disposed in the center of the gas flow space inside the casing 141. The torque tube 144 has a hollow tubular shape, and an upstream end of the torque tube 144 is coupled to the tie rod 122, and a downstream end of the torque tube 144 is coupled to the rotor 142.

A plurality of rotating blades 143 are mounted on an outer circumferential surface of the rotor 142. Each of the rotating blades 143 includes a dovetail 143a formed at an end of the rotor 142. The dovetail 143a is slidably inserted into and coupled to a coupling groove 142a formed in the outer circumferential surface of the rotor 142. The dovetail 143a has a fir tree shape, and the coupling groove 142a has a shape corresponding to the fir tree shape of the dovetail 143a.

A pair of retainers 145 are mounted on both sides of the dovetail 143a of each of the rotating blades 143 inserted into the rotor 142.

Each of the pair of retainers 145 includes a retainer frame 146 and a fixing unit 150.

The retainer frame 146 has a plate shape, and an inside chamber 148 in which cooled air may be accommodated, is formed in a surface of the retainer frame 146 facing the rotating blade 143. The retainer frame 146 is disposed at one side of the rotating blade 143 and the rotor 142, and forms the inside chamber 148 into which the cooled air for cooling the dovetail 143a of the rotating blade 143 and the rotor 142 is introduced.

In addition, the inside chamber 148 is divided into three, i.e., first through third cooling chambers 148a, 148b, and 148c by means of a barrier wall formed at one side of the retainer frame 146. In the current embodiment, the inside chamber 148 is divided into three cooling chambers. However, the number of cooling chambers is not limited thereto, and the inside chamber 148 may be divided into a plurality of cooling chambers according to design conditions.

The barrier wall 147 includes a plurality of barrier wall members spaced apart from one another in the radial direction of the rotor 142 and forms the plurality of cooling chambers 148a, 148b, and 148c formed by dividing the inside chamber 148 in the radial direction of the rotor 142. As the inside chamber 148 is divided into the plurality of cooling chambers 148a, 148b, and 148c in the radial direction of the rotor 142 by means of the plurality of barrier wall members, the cooled air is delayed from flowing to the radial outside of the rotor 142 and flows from the inside to the outside of each rotating blade 143 sequentially so that the cooling efficiency of the rotor 142 and the rotating blades 143 can be improved.

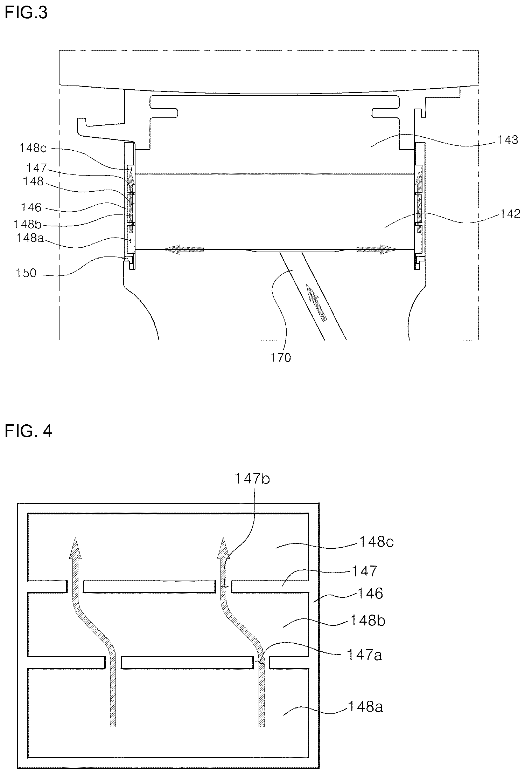

Referring to FIG. 4, first and second communication holes 147a and 147b through which a plurality of cooling spaces communicate with one another, are formed in the barrier wall members. The first and second communication holes 147a and 147b for guiding appropriate flow of the cooled air inside the cooling chambers 148a, 148b, and 148c may be formed in crossing positions of other communication holes of the adjacent barrier wall member.

Referring to FIG. 3, a cooled air flow path 170 that supplies the cooled air into the coupling groove 142a, is formed at one side of the coupling groove 142a of the rotor 142. The cooled air supplied via the cooled air flow path 170 may cool the dovetail 143a of the rotating blade 143. In addition, the cooled air flow path 170 may extend between the rotor 142 and the rotating blade 143, and the extending cooled air flow path 170 may communicate with the inside chamber 148 of each retainer 145.

Thus, the cooled air supplied via the cooled air flow path 170 is supplied into the first cooling chamber 148a that is the innermost chamber of the inside chamber 148 of the retainer 145, in the radial direction of the rotor 142.

The cooled air supplied into the first cooling chamber 148a cools the innermost part of the dovetail 143a and the rotor 142 sufficiently and then is transferred to the second cooling chamber 148b through the first communication hole 147a. The cooled air supplied to the second cooling chamber 148b also cools the dovetail 143a of the adjacent rotating blade 143 and the rotor 142 and then is transferred to the third cooling chamber 148c through the second communication hole 147b.

In this case, the first communication hole 147a and the second communication hole 147b are formed in crossing positions. Thus, the cooled air supplied through the first communication hole 147a is delayed from flowing into the third cooling chamber 148c through the second communication hole 147b so that the cooled air in the second cooling chamber 148b may cool the dovetail 143a of the rotating blade 143 and the rotor 142.

In a retainer for a gas turbine blade, a turbine unit and a gas turbine using the same according to an embodiment of the present invention, the flow of cooled air that flows in a cooling space formed at one side of a rotating blade and a rotor is controlled so that the cooled air can flow from the inside to the outside of the rotating blade sequentially and thus the cooling efficiency of the rotating blade and the rotor can be improved.

As described above, the structure of a retainer for supporting blades is improved so that the cooling efficiency of the blades and the rotor can be improved.

In addition, according to the present invention, a cooling space formed in a rear surface of the retainer is divided into a plurality of parts in a radial direction so that cooled air can be sequentially moved to the radial outside of the rotor. Thus, cooling of a rotating blade is smoothly performed so that the durability of the blades can be improved.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A retainer (145) for a rotating blade (143), which is configured to inhibit deviation of the rotating blade (143) mounted on a rotor (142) of a gas turbine (100), the retainer (145) comprising:
a retainer frame (146) configured to be disposed at one side of the rotating blade (143) and configured to form an inside chamber (148) for introducing cooled air between the retainer frame (146) and the rotating blade (143);
a barrier wall (147) formed on the retainer frame (146) and configured to be disposed towards said side of the rotating blade (143) and configured to divide the inside chamber (148) into a plurality of cooling chambers (148a; 148b; 148c) with respect to a radial direction, wherein the barrier wall (147) comprises a plurality of barrier wall members spaced apart from one another in the radial direction, and wherein communication holes (147a; 147b) are formed in the plurality of barrier wall members so that the plurality of cooling chambers (148a; 148b; 148c) communicate with one another through the communication holes (147a; 147b); and
a fixing unit (150) disposed at one side of the retainer frame (146) with respect to the radial direction and configured to fix the retainer (145) frame to the rotor (142).

2. The retainer (145) of claim 1, wherein the retainer is configured for a rotating blade (143), one end of which has a fir tree shape.

3. The retainer of claim 1, wherein the communication holes (147) formed in one of the barrier wall members are formed at crossing positions with respect to the communication holes formed in an adjacent barrier wall member.

4. A turbine unit (140) comprising:
a casing (141) comprising a gas inlet (141a) formed at one side thereof and a gas outlet (141b) formed at the other side thereof, the casing (141) configured to form a gas flow space inside thereof;
a torque tube (144) rotatably mounted in the gas flow space inside the casing (141);
a rotor (142) coupled to the torque tube (144) and rotating together with the torque tube (144);
a rotating blade (143) mounted on the rotor (142);
a retainer according to claim 1, wherein the retainer has its retainer frame disposed at one side of the rotating blade (143) and is fixed to the rotor by means of the fixing unit (150), wherein the barrier wall members are spaced apart from one another in the radial direction of the rotor (142); and
a fixed blade (149) formed at an inner wall of the casing (141).

5. The turbine unit (140) of claim 4, wherein a cooled air flow path (170) is formed between the rotating blade (143) and the rotor (142), wherein the inside chamber (148) and the cooled air flow path communicate (170) with each other, wherein the cooled air flow path (170) is configured to supply cooled air into the inside chamber (148).

6. The turbine unit (140) of claim 4, comprising a further retainer (145) according to claim 1, wherein the retainers (145) are mounted on opposite sides of a dovetail (143a) of the rotating blade (143).

7. A gas turbine (100) comprising:
a compressor unit (120) configured to compress air supplied from the outside;
a combustor unit (130) configured to combust the compressed air supplied from the compressor unit (120) and a fuel so as to generate an operating gas; and
a turbine unit according to claim 4.

## Patentansprüche

1. Halterung (145) für eine Laufschaufel (143), welche eingerichtet ist, eine Abweichung der an einem Rotor (142) einer Gasturbine (100) montierten Laufschaufel (143) zu verhindern, umfassend:
einen Halterungsrahmen (146), der eingerichtet ist, an einer Seite der Laufschaufel (143) angeordnet zu werden, und der eingerichtet ist, eine innere Kammer (148) zum Einführen von Kühlluft zwischen dem Halterungsrahmen (146) und der Laufschaufel (143) auszubilden;
eine Sperrwand (147), die auf dem Halterungsrahmen (146) ausgebildet ist und die eingerichtet ist, besagter Seite der Laufschaufel (143) entgegen angeordnet zu werden, und die eingerichtet ist, die innere Kammer (148) in eine Vielzahl von Kühlkammern (148a; 148b; 148c) bezüglich einer radialen Richtung zu unterteilen, wobei die Sperrwand (147) eine Vielzahl von Sperrwandelementen aufweist, die in der radialen Richtung einen Abstand zueinander aufweisen, und wobei Verbindungslöcher (147a; 147b) in der Vielzahl von Sperrwandelementen ausgebildet sind, sodass die Vielzahl von Kühlkammern (148a; 148b; 148c) miteinander durch die Verbindungslöcher (147a; 147b) verbunden sind; und
eine Befestigungseinheit (150), die an einer Seite des Halterungsrahmens (146) bezüglich der radialen Richtung angeordnet ist und die eingerichtet ist, den Halterungsrahmen (146) an dem Rotor (142) zu befestigen.

2. Halterung (145) nach Anspruch 1, wobei die Halterung für eine Laufschaufel (143) eingerichtet ist, deren eines Ende eine Tannenbaumform aufweist.

3. Halterung nach Anspruch 1, wobei die in einem der Sperrwandelemente ausgebildeten Verbindungslöcher (147a; 147b) an Kreuzungspositionen bezüglich der in einem benachbarten Sperrwandelement ausgebildeten Verbindungslöcher ausgebildet sind.

4. Turbineneinheit (140), umfassend:
ein Gehäuse (141), das einen Gaseinlass (141a), der an einer Seite davon ausgebildet ist, und einen Gasauslass (141b), der an der anderen Seite davon ausgebildet ist, umfasst, wobei das Gehäuse (141) eingerichtet ist, einen Gasdurchgangsraum im Inneren davon auszubilden;
ein Torsionsrohr (144), das in dem Gasdurchgangsraum innerhalb des Gehäuses (141) drehbar montiert ist;
einen Rotor (142), der mit dem Torsionsrohr (144) gekoppelt ist und zusammen mit dem Torsionsrohr (144) rotiert;
eine Laufschaufel (143), die an dem Rotor (142) montiert ist;
eine Halterung gemäß Anspruch 1, wobei der Halterungsrahmen der Halterung auf einer Seite der Laufschaufel (143) angeordnet ist und die Halterung an dem Rotor mittels der Befestigungseinheit (150) befestigt ist und wobei die Sperrwandelemente in der radialen Richtung des Rotors (142) zueinander einen Abstand aufweisen; und
eine Leitschaufel (149), die an einer Innenwand des Gehäuses (141) ausgebildet ist.

5. Turbineneinheit (140) nach Anspruch 4, wobei ein Kühlluftströmungsweg (170) zwischen der Laufschaufel (143) und dem Rotor (142) ausgebildet ist, wobei die innere Kammer (148) und der Kühlluftströmungsweg (170) miteinander verbunden sind und wobei der Kühlluftströmungsweg (170) eingerichtet ist, Kühlluft in die innere Kammer (148) zu liefern.

6. Turbineneinheit (140) nach Anspruch 4, umfassend eine weitere Halterung (145) gemäß Anspruch 1, wobei die Halterungen (145) auf gegenüberliegenden Seiten eines Schwalbenschwanzes (143a) der Laufschaufel (143) montiert sind.

7. Gasturbine (100), umfassend:
eine Verdichtereinheit (120), die eingerichtet ist, von außen bereitgestellte Luft zu verdichten;
eine Verbrennereinheit (130), die eingerichtet ist, die von der Verdichtereinheit (120) bereitgestellte verdichtete Luft und einen Brennstoff zu verbrennen, um ein Betriebsgas zu erzeugen; und
eine Turbineneinheit gemäß Anspruch 4.

## Revendications

1. Dispositif de retenue (145) pour une aube rotative (143), prévu pour empêcher une déviation de l'aube rotative (143) montée sur un rotor (142) d'une turbine à gaz (100), ledit dispositif de retenue (145) comprenant :
un cadre de retenue (146) prévu pour être disposé sur un côté de l'aube rotative (143) et
pour former une chambre intérieure (148) permettant la pénétration d'air refroidi entre le cadre de retenue (146) et l'aube rotative (143) ;
une paroi barrière (147) formée sur le cadre de retenue (146) et prévue pour être disposée vers le côté de l'aube rotative (143) et pour partager la chambre intérieure (148) en une pluralité de chambres de refroidissement (148a ; 148b ; 148c) dans la direction radiale,
où la paroi barrière (147) comprend une pluralité d'éléments de paroi barrière espacés l'un de l'autre dans la direction radiale, et où des orifices de communication (147a ; 147b) sont formés dans la pluralité d'éléments de paroi barrière, de sorte que la pluralité de chambres de refroidissement (148a ; 148b ; 148c) communiquent les unes avec les autres par les orifices de communication (147a ; 147b) ; et
une unité de fixation (150) disposée sur un côté cadre de retenue (146) dans la direction radiale et prévu pour fixer le cadre de retenue (146) au rotor (142).

2. Dispositif de retenue (145) selon la revendication 1, où ledit dispositif de retenue est prévu pour une aube rotative (143) dont une extrémité est en forme de sapin.

3. Dispositif de retenue selon la revendication 1, où les orifices de communication (147) formés dans un des éléments de paroi barrière sont formés à des emplacements d'intersection par rapport aux orifices de communication formés dans un élément de paroi barrière adjacent.

4. Unité de turbine (140), comprenant :
un carter (141) présentant une entrée de gaz (141a) formée sur un de ses côtés et une sortie de gaz (141b) formée sur son autre côté, ledit carter (141) étant prévu pour former un espace intérieur d'écoulement gazeux ;
un tube de torsion (144) monté de manière rotative dans l'espace d'écoulement gazeux à l'intérieur du carter (141) ;
un rotor (142) raccordé au tube de torsion (144) et rotatif avec le tube de torsion (144) ;
une aube rotative (143) montée sur le rotor (142) ;
le dispositif de retenue selon la revendication 1, où ledit dispositif de retenue a son cadre de retenue disposé sur un côté de l'aube rotative (143) et est fixé au rotor au moyen de l'unité de fixation (150), les éléments de paroi barrière étant espacés l'un de l'autre dans la direction radiale du rotor (142) ; et
une aube fixe (149) formée sur une paroi intérieure du carter (141).

5. Unité de turbine (140) selon la revendication 4, où un passage d'air refroidi (170) est formé entre l'aube rotative (143) et le rotor (142), où la chambre intérieure (148) et le passage d'air refroidi communiquent (170) entre eux, le passage d'air refroidi (170) étant prévu pour refouler de l'air refroidi vers la chambre intérieure (148).

6. Unité de turbine (140) selon la revendication 4, comprenant un autre dispositif de retenue (145) selon la revendication 1, où des dispositifs de retenue (145) sont montés sur des côtés opposés d'une queue d'aronde (143a) de l'aube rotative (143).

7. Turbine à gaz (100), comprenant :
une unité de compresseur (120) prévue pour comprimer l'air provenant de l'extérieur ;
une unité de brûleur (130) prévue pour brûler l'air comprimé refoulé par l'unité de compresseur (120) et un combustible pour générer un gaz de travail ; et
une unité de turbine selon la revendication 4.
